# EUROPEAN PATENT APPLICATION

(11) **EP 3 485 842 A1**
(43) Date of publication of application: **22.05.2019**
(21) Application number: 18205601.0
(22) Date of filing: 12.11.2018
(51) Int. Cl.: A61C 17/00, A61C 19/06

(54) **TOOTH-WHITENING DEVICE**

(30) Priority: 21.11.2017 JP 2017223904
(71) Applicant: Panasonic Intellectual Property Management Co., Ltd., Osaka-shi, Osaka 540-6207 (JP)
(72) Inventor: OTSUKA, Risa, Osaka-shi, Osaka 540-6207 (JP); TAKEMATSU, Haruka, Osaka-shi, Osaka 540-6207 (JP)
(74) Representative: Grünecker Patent- und Rechtsanwälte PartG mbB

(57) **Abstract**

Tooth-whitening device (10) includes generator (30) that generates a tooth-whitening fluid, neckband (20) provided with generator (30), outlet (50) provided with supply port (53) through which the tooth-whitening fluid is supplied into an oral cavity, and hollow part (40) that guides a gas containing the tooth-whitening fluid generated by generator (30) to outlet (50). For example, outlet (50) is a mouthpiece, and hollow part (40) is a hose.

## Description

### BACKGROUND

### 1. Technical Field

The present disclosure relates to a tooth-whitening device that supplies a tooth-whitening fluid to teeth.

### 2. Description of the Related Art

A known tooth-whitening device supplies a tooth-whitening fluid to teeth to whiten teeth. For example, a tooth-whitening device disclosed in Japanese Patent Unexamined Publication No. 2015-229084 includes a generator configured to generate a tooth-whitening fluid, a mouthpiece configured to supply the tooth-whitening fluid into an oral cavity, and a hollow part configured to guide the tooth-whitening fluid from the generator to the mouthpiece.

### SUMMARY

A conventional tooth-whitening device limits user's activity while using the tooth-whitening device. From the viewpoint of usability, this kind of limitation is preferably minimized.

A tooth-whitening device in a preferred embodiment of the present disclosure includes a generator configured to generate a tooth-whitening fluid and a neckband including the generator.

The preferred embodiment improves usability.

### BRIEF DESCRIPTION OF DRAWINGS

Fig. 1 is a perspective view of a tooth-whitening device in a preferred embodiment.
Fig. 2 is a front view of the tooth-whitening device in Fig. 1.
Fig. 3 is an example of the state of use of the tooth-whitening device.

### DETAILED DESCRIPTION

A tooth-whitening device in a first exemplary embodiment of the present disclosure includes a generator configured to generate a tooth-whitening fluid and a neckband including the generator. Unlike a conventional tooth-whitening device whose generator is placed typically on a table, this exemplary embodiment allows the user to move around during the use of the tooth-whitening device in the state the neckband is worn around the user's neck. Accordingly, limitation of user's activity is reduced.

A tooth-whitening device in a second exemplary embodiment of the present disclosure further includes an outlet provided with a supply port through which the tooth-whitening fluid is supplied into an oral cavity, and a hollow part for guiding to the outlet a gas containing the tooth-whitening fluid generated by the generator, in addition to the first exemplary embodiment. This exemplary embodiment enables designing of neckband and outlet structures separately.

In a tooth-whitening device in a third exemplary embodiment of the present disclosure, the outlet is a mouthpiece and the hollow part is a hose, in addition to the second exemplary embodiment. Since the user does not need to hold the outlet while using the tooth-whitening device, usability is further improved in this exemplary embodiment.

A tooth-whitening device in a fourth exemplary embodiment of the present disclosure includes an inner face toward a human body and an outer face provided on the opposite side of the inner face of the neckband, in addition to the first exemplary embodiment. The generator is provided on the outer face. When the neckband is worn around the user's neck, the generator does not contact the human body in this exemplary embodiment.

In a tooth-whitening device in a fifth exemplary embodiment of the present disclosure, the neckband includes a curved part to be placed on the back of the user's neck, and a first end and a second end extending from the curved part to the front of the user's neck, in addition to the first exemplary embodiment. The generator is provided on at least one of the first end and the second end. When the neckband is worn around the user's neck, the user can easily see the generator in this exemplary embodiment.

In a tooth-whitening device in a sixth exemplary embodiment of the present disclosure, the generator includes a discharger that generates a tooth-whitening fluid by electric discharge, and a feeder for supplying a material gas to the discharger, in addition to the fifth exemplary embodiment. The discharger is provided on one of the first end and the second end, and the feeder is provided on the other of the first end and the second end. In this exemplary embodiment, the discharger and the generator, which are heavy compared to the neckband, are provided on different ends. Accordingly, a good weight balance is achieved.

In a tooth-whitening device in a seventh exemplary embodiment of the present disclosure, the first end includes a first lower rim toward a human body and a first upper rim on the opposite side of the first lower rim, and the second end includes a second lower rim toward the human body and a second upper rim on the opposite side of the second lower rim, in addition to the fifth exemplary embodiment. The first end and the second end are twisted against the curved part so that a distance between the first upper rim and the second upper rim becomes narrow. This exemplary embodiment prevents a strong contact of the first end and the second end with the collarbone when the neckband is worn around the user's neck.

In a tooth-whitening device in an eighth exemplary embodiment of the present disclosure, the neckband has a flat shape, in addition to the fifth exemplary embodiment. A width of the inner face of the neckband facing a human body is broadened, and thus the position of the neckband worn around the user's neck is stabilized.

In a tooth-whitening device in a ninth exemplary embodiment of the present disclosure, the generator generates the tooth-whitening fluid from carbon dioxide gas, in addition to the first exemplary embodiment. Acidic component is unlikely generated when electric discharge is applied to the carbon dioxide gas. Accordingly, the exemplary embodiment suppresses attachment of the acidic component for a long period while using the tooth-whitening device.

A preferred embodiment of the tooth-whitening device of the present disclosure is described below with reference to attached drawings.

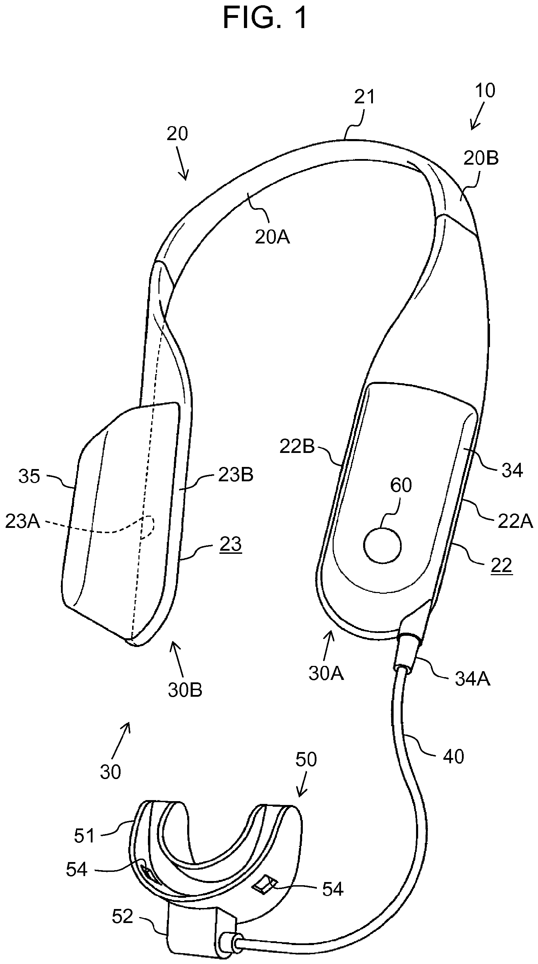

Fig. 1 is an example of tooth-whitening device 10 that supplies to teeth the tooth-whitening fluid to whiten teeth. The tooth-whitening fluid contains an active ingredient having a tooth-whitening effect. An example of the tooth-whitening fluid is a gas containing charged particulate water. The charged particulate water contains radical species that is the active ingredient. An example of the radical species is OH radicals.

Major components of tooth-whitening device 10 are neckband 20 and generator 30. Generator 30 generates the tooth-whitening fluid. Generator 30 is provided on neckband 20. In the preferred embodiment, neckband 20 is a resin object configured such that it can be worn around the user's neck. Shape and size of neckband 20 can be selected arbitrarily. Neckband 20 has a flat shape.

Neckband 20 includes curved part 21 that can be placed on the back of the user's neck, and first end 22 and second end 23 extending from curved part 21 to the front of the user's neck. In the preferred embodiment, first end 22 is an end to the left-hand side of neckband 20 when seen from the user. Second end 23 is an end to the right-hand side of neckband 20 when seen from the user. First end 22 and second end 23 may also be to the right-hand side and to the left-hand side of neckband 20, respectively, when seen from the user.

The shape of curved part 21 is preferably determined to fit well on the back of the user's neck. Neckband 20 has inner face 20A facing the human body when neckband 20 is worn around the user's neck, and outer face 20B provided on the opposite side of inner face 20A. Inner face 20A and outer face 20B are curved faces according to the shape of neckband 20.

First end 22 includes first lower rim 22A toward the human body when neckband 20 is worn around the user's neck, and first upper rim 22B provided on the opposite side of first lower rim 22A. Second end 23 includes second lower rim 23A toward the human body when neckband 20 is worn around the user's neck, and second upper rim 23B provided on the opposite side of second lower rim 23A.

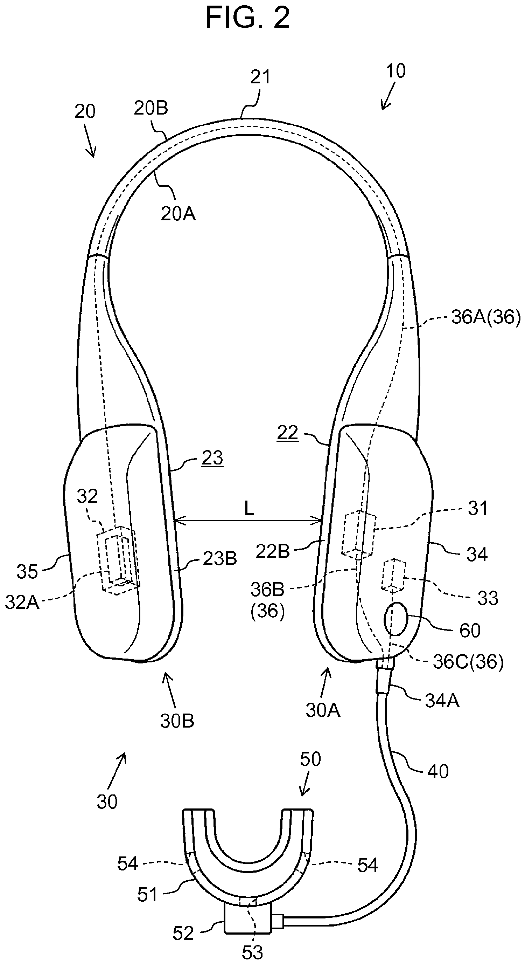

First end 22 and second end 23 are twisted relative to curved part 21 so that distance L (Fig. 2) between first upper rim 22B and second upper rim 23B becomes narrow. A comparative distance of distance L is distance L between first upper rim 22B and second upper rim 23B when first end 22 and second end 23 are not twisted relative to curved part 21.

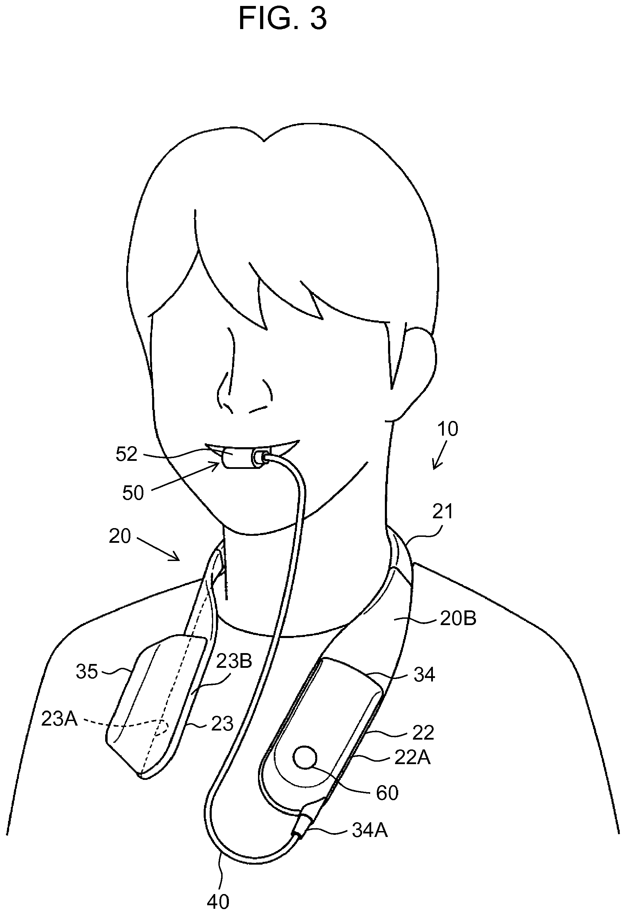

As shown in Fig. 3, first end 22 and second end 23 come to a position around the collarbone of the user when neckband 20 is worn around the user's neck. Since first end 22 and second end 23 are twisted, inner faces 20A of first end 22 and second end 23 tilt, facing an area around the collarbone, and first lower rim 22A and second lower rim 23A face opposite to the human body. Accordingly, first lower rim 22A and second lower rim 23A do not strongly contact the collarbone.

As shown in Fig. 2, generator 30 includes discharger 31 and feeder 32. Discharger 31 is a unit including multiple components for electric discharge. Discharger 31 generates the tooth-whitening fluid by applying electric discharge to the material gas. Feeder 32 supplies the material gas used for generating the tooth-whitening fluid to discharger 31.

In the preferred embodiment, feeder 32 includes a cylinder attachment part configured to set detachable gas cylinder 32A. A type of the material gas can be selected arbitrarily. Preferably, a gas that generates less acidic component than air when used for generating tooth-whitening fluid by electric discharge is selected. For example, carbon dioxide gas, oxygen gas, nitrogen gas, and argon gas are used. Tooth-whitening device 10 employs gas cylinder 32A storing carbon dioxide gas. Positions of discharger 31 and feeder 32 on neckband 20 can be selected arbitrarily. In the exemplary embodiment, discharger 31 and feeder 32 are provided on outer face 20B of neckband 20.

Discharger 31 and feeder 32 are heavier than neckband 20. Therefore, to balance the load applied to neckband 22, one of discharger 31 and feeder 32 is preferably provided on first end 22, and the other on second end 23.

When feeder 32 includes the cylinder attachment part for gas cylinder 32A, the weight of feeder 32 also includes the weight of gas cylinder 32A. In the preferred embodiment shown in the figures, discharger 31 is provided on outer face 20B of first end 22. Feeder 32 is provided on outer face 20B of second end 23.

Generator 30 further includes humidifier 33. Humidifier 33 generates humidified gas. For example, humidifier 33 humidifies air. A position of humidifier 33 on neckband 20 can be selected arbitrarily. In the preferred embodiment shown in the figures, humidifier 33 is provided on outer face 20B of first end 22.

Generator 30 further includes first case 34 and second case 35. First case 34 and second case 35 are resin boxes and configured to house the components in a space inside. First case 34 is provided on outer face 20B of first end 22 of neckband 20. First case 34 houses discharger 31. First case 34 has connector 34A for connecting hollow part 40.

A position to form connector 34A on first case 34 can be selected arbitrarily. In the preferred embodiment shown in the figures, connector 34A is provided on first case 34 in a way such that it protrudes to the side opposite to curved part 21. Second case 35 is provided on outer face 20B of second end 23 of neckband 20. Second case 35 houses feeder 32.

First case 34 and second case 35 are connected to neckband 20 using any selected method. At least one of first case 34 and second case 35 may be integrally formed with neckband 20. At least one of first case 34 and second case 35 may be connected to neckband 20 typically with screw.

Generator 30 further includes internal flow path 36. Internal flow path 36 includes first internal flow path 36A, second internal flow path 36B, and third internal flow path 36C. First internal flow path 36A connects a gas outlet of feeder 32 and a gas inlet of discharger 31.

First internal flow path 36A is provided between second end 23 and first end 22 inside neckband 20. Second internal flow path 36B is connected to a gas outlet of discharger 31. Third internal flow path 36C is connected to a gas outlet of humidifier 33.

First case 34 and components provided in its inside configure first unit 30A of generator 30. In the preferred embodiment shown in the figures, first unit 30A includes first case 34, discharger 31, and humidifier 33. Second case 35 and components provided in its inside configure second unit 30B of generator 30. In the preferred embodiment shown in the figures, second unit 30B includes second case 35, feeder 32, and gas cylinder 32A.

Loads applied to neckband 20 are preferably balanced by appropriately selecting components provided inside first case 34 of first unit 30A and components provided inside second case 35 of second unit 30B.

When generator 30 further includes another component, loads are preferably balanced, including this component, by appropriately determining components in first unit 30A and second unit 30B. Another component is, for example, a power unit.

A width of neckband 20 can be selected arbitrarily. In the preferred embodiment shown in the figures, a width of curved part 21 is almost fixed.

A width of first end 22 is almost fixed at a portion where first case 34 is provided. A width between the portion of first end 22 where first case 34 is provided and curved part 21 is narrowed toward curved part 21.

In second end 23, a width of a portion where second case 35 is provided is almost fixed. A width between the portion of second end 23 where second case 35 is provided and curved part 21 is narrowed toward curved part 21.

Tooth-whitening device 10 further includes hollow part 40 and outlet 50. Hollow part 40 connects generator 30 and outlet 50 such that hollow part 40 guides to outlet 50 the gas containing tooth-whitening fluid generated in discharger 31. Hollow part 40 is, for example, a flexible hose.

A method of attaching hollow part 40 to generator 30 and outlet 50 can be selected arbitrarily. Hollow part 40 may be detachably connected to generator 30 and outlet 50. Or, hollow part 40 may be fixed onto generator 30 and outlet 50.

A length of hollow part 40 can be selected arbitrarily. For example, the length of hollow part 40 is selected from a range between 0.5 cm and 150 cm. In the preferred embodiment shown in the figures, the length of hollow part 40 is 30 cm.

A gas flow path is formed inside hollow part 40. The flow path includes a first flow path and a second flow path. The first flow path is connected to second internal flow path 36B of generator 30. The first flow path guides to outlet 50 the gas containing tooth-whitening fluid generated by discharger 31. The second flow path is connected to third internal flow path 36C of generator 30. The second flow path guides to outlet 50 the gas containing humidified gas generated by humidifier 33.

Inside hollow part 40, the first flow path and the second flow path are partitioned so as not to mix the gas flowing in the first flow path and the gas flowing in the second flow path.

A material configuring hollow part 40 can be selected arbitrarily. Preferably, at least a material configuring an inner periphery of hollow part 40 is a material that is positively charged more easily than silicon. For example, polypropylene, nylon, vinyl chloride, and aluminum are used.

A material configuring hollow part 40 is selected with reference to the triboelectric series. In the preferred embodiment shown in the figures, entire hollow part 40, including the inner periphery, is configured with vinyl chloride from the viewpoint of its ease of charging and flexibility. A material easy to be positively-charged adsorbs less OH radicals. Accordingly, when the gas containing tooth-whitening fluid passes through the first flow path, OH radicals contained in the tooth-whitening fluid are hardly adsorbed to the inner periphery of hollow part 40.

Outlet 50 is configured to supply the gas fed through hollow part 40 into an oral cavity. Outlet 50 preferably has a shape that can be held in the mouth or fitted around the mouth. For example, outlet 50 is a mouthpiece.

A material configuring outlet 50 can be selected arbitrarily. For example, a resin material is used. A material configuring outlet 50 is preferably a material that is positively charged more easily than silicon.

Outlet 50 is divided into curved part 51 and connector 52. Curved part 41 is a part facing the front of teeth when outlet 50 is held in the mouth. Curved part 51 is curved along alignment of teeth.

Curved part 51 has supply port 53 for supplying the gas into the oral cavity, and exhaust port 54 for releasing the gas in the oral cavity outside the oral cavity. Supply port 53 and exhaust port 54 are through-holes in curved part 51. The shape, size, and number of supply ports 53 and exhaust ports 54 can be selected arbitrarily. Supply port 53 and exhaust port 54 may be formed in any portion of curved part 51.

Connector 52 is connected to hollow part 40, and guides the gas supplied from hollow part 40 to supply port 53. In the preferred embodiment shown in the figures, hollow part 40 is connected to the side of connector 52. A gas flow path connected to supply port 53 is formed inside connector 52. The first flow path and the second flow path of hollow part 40 are connected to the flow path of connector 52. Gas flowing in the first flow path is mixed with gas flowing in the second flow path in the flow path inside connector 52.

Tooth-whitening device 10 further includes operation part 60. Operation part 60 is a user interface. Operation part 60 is, for example, a button and switch provided on first case 34. The user can select various conditions for operating tooth-whitening device 10 by operating operation part 60.

For example, the user can determine by operation part 60 whether or not to operate discharger 31 and whether or not to operate humidifier 33. The user can designate a flow rate of the gas containing tooth-whitening fluid supplied from generator 30, and a flow rate of the gas containing humidified gas supplied from generator 30.

Next is described an example of a whitening process using tooth-whitening device 10. First, as shown in Fig. 3, the user holds outlet 50 in the mouth. Then, power of generator 30 is turned on. Discharger 31 activates and the tooth-whitening fluid is generated. The gas containing tooth-whitening fluid flows into the oral cavity via hollow part 40 and outlet 50.

Then, charged particulate water reaches teeth, and radical species contained in the charged particulate water takes electrons from coloring organic substance attached to each tooth. This decomposes the coloring organic substance and whitens teeth.

Humidifier 33 is activated to generate humidified gas. The gas containing humidified gas flows into the oral cavity via hollow part 40 and outlet 50. Moisture of the humidified gas attaches to each tooth. The tooth-whitening fluid is thus supplied to moistened teeth. Since moisture of the humidified gas attaches to oral organs, such as gum and tongue, these organs are unlikely dried during the use of tooth-whitening device 10.

A tooth-whitening effect of tooth-whitening fluid is enhanced when the tooth-whitening fluid is supplied to moistened teeth. When an acidic component attaches to a tooth for a long period, a tooth surface may be adversely affected. In particular, when a tooth is moistened, an effect of acidic component increases.

Taking this effect of moisture into account, tooth-whitening device 10 is configured to whiten a tooth efficiently while protecting the tooth. More specifically, tooth-whitening device 20 includes feeder 32 that supplies carbon dioxide gas to discharger 31, and discharger 31 that generates the tooth-whitening fluid by applying electric discharge to the carbon dioxide gas supplied from feeder 32.

By applying electric discharge to the carbon dioxide gas, the gas after electric discharge does not substantially contain an acidic component. Accordingly, a gas containing the tooth-whitening fluid but not containing the acidic component is supplied from outlet 50 to the oral cavity. As a result, an adverse effect of acidic component on the tooth surface can be suppressed.

Tooth-whitening device 10 includes humidifier 33 for generating humidified gas. The humidified gas generated by humidifier 33 is supplied into the oral cavity and its moisture attaches to teeth. Accordingly, the tooth-whitening fluid acts on moistened teeth. As a result, teeth are efficiently whitened.

Unlike a conventional tooth-whitening device whose generator is placed typically on a table, the user can move around while using tooth-whitening device 10 by wearing neckband 20 around the neck. This reduces limitation of user's activity.

### Modified Example

The above preferred embodiment describes an exemplary mode of the tooth-whitening device of the present disclosure, and is thus not considered to be restrictive. For example, the tooth-whitening device of the present disclosure may include a modified example below, in addition to the above preferred embodiment.

A structure of feeder 32 of generator 30 can be changed arbitrarily. For example, feeder 32 is provided on the outer face of second case 35. In this case, gas cylinder 32A attached to feeder 32 is also provided on the outer face of second case 35. Feeder 32 is, for example, a chamber configured to store material gas.

In this case, the material gas is supplied to feeder 32 in the next way. A separately-prepared gas cylinder and feeder 32 are connected, such as by a hose. The material gas is supplied from the gas cylinder to feeder 32, and thus the chamber is filled with the material gas. When the material gas is fully supplied, connection between the gas cylinder and feeder 32 is released.

A structure of hollow part 40 can be changed arbitrarily. A material configuring the inner periphery of hollow part 40 is, for example, different from a material configuring other portion of hollow part 40. To suppress adsorption of OH radicals, the material configuring the inner periphery is preferably a material that is easy to be positively charged.

A structure of outlet 50 can be changed arbitrarily. Outlet 50 is, for example, a mask covering the mouth for supplying gas into the oral cavity. The mask preferably includes a portion covering the mouth and a portion held in the mouth. The portion held in the mouth has a supply port for supplying gas into the oral cavity. Outlet 50 may also be a nozzle that can be held in the mouth.

As described above, the present disclosure is applicable to home-use and business-use tooth-whitening devices.

## Claims

1. A tooth-whitening device comprising:
a generator configured to generate a tooth-whitening fluid; and
a neckband including the generator.

2. The tooth-whitening device of claim 1, further comprising:
an outlet including a supply port, the tooth-whitening fluid being supplied into an oral cavity through the supply port; and
a hollow part configured to guide to the outlet a gas containing the tooth-whitening fluid generated by the generator.

3. The tooth-whitening device of claim 2,
wherein
the outlet is a mouthpiece, and
the hollow part is a hose.

4. The tooth-whitening device of claim 1,
wherein
the neckband includes an inner face facing a human body and an outer face provided on an opposite side of the inner face, and
the generator is provided on the outer face.

5. The tooth-whitening device of claim 1,
wherein
the neckband includes a curved part to be placed on a back of an user's neck, and a first end and a second end, the first end and the second end extending from the curved part to a front of the user's neck, and
the generator is provided on at least one of the first end and the second end.

6. The tooth-whitening device of claim 5,
wherein
the generator includes a discharger configured to generate the tooth-whitening fluid by electric discharge, and a feeder configured to supply a material gas to the discharger,
the discharger is provided on one of the first end and the second end, and
the feeder is provided on an other of the first end and the second end.

7. The tooth-whitening device of claim 5,
wherein
the first end includes a first lower rim facing a human body and a first upper rim on an opposite side of the first lower rim,
the second end includes a second lower rim facing the human body and a second upper rim on an opposite side of the second lower rim, and
the first end and the second end are twisted relative to the curved part so that a distance between the first upper rim and the second upper rim is narrowed.

8. The tooth-whitening device of claim 5, wherein the neckband has a flat shape.

9. The tooth-whitening device of claim 1, wherein the generator is configured to generate the tooth-whitening fluid from carbon dioxide gas.
